# EUROPÄISCHE PATENTSCHRIFT

(11) **EP 3 615 834 B1**
(45) Veröffentlichungstag und Bekanntmachung des Hinweises auf die Patenterteilung: **31.03.2021**
(21) Anmeldenummer: 18720994.5
(22) Anmeldetag: 19.04.2018
(51) Int. Cl.: F16D 65/12

(54) **BREMSSCHEIBENANORDNUNG FÜR EINE SCHEIBENBREMSE EINES KRAFTFAHRZEUGS, VERFAHREN**
BRAKE DISC ASSEMBLY FOR A DISC BRAKE OF A MOTOR VEHICLE, AND METHOD
DISPOSITIF DE DISQUE DE FREIN PRÉVU POUR UN FREIN À DISQUE D'UN VEHICULE, PROCÉDÉ

(30) Priorität: 27.04.2017 DE 102017207114; 22.06.2017 DE 102017210451
(43) Veröffentlichungstag der Anmeldung: 04.03.2020
(73) Patentinhaber: Robert Bosch GmbH, 70442 Stuttgart (DE)
(72) Erfinder: RAAB, Roland, 69168 Wiesloch (DE); LE BARZIC, Laurent, 67000 Strasbourg (FR)
(86) Internationale Anmeldenummer: PCT/EP2018/059978
(87) Internationale Veröffentlichungsnummer: WO 2018/197319

(56) Entgegenhaltungen:
- WO-A1-02/33280
- WO-A1-03/029684
- US-A1- 2013 146 405

## Beschreibung

Die Erfindung betrifft eine Bremsscheibenanordnung für eine Scheibenbremse eines Kraftfahrzeugs, mit einem aus einem ersten Material gefertigten Reibring und mit einem aus einem zweiten Material gefertigten Bremsscheibentopf, der an dem Reibring stirnseitig befestigt ist, wozu der Bremsscheibentopf einen ersten Anschlussring mit mehreren ersten Radialöffnungen und der Reibring einen zweiten Anschlussring mit mehreren zweiten Radialöffnungen aufweist, wobei die Anschlussringe derart koaxial zueinander angeordnet sind, dass zumindest einige der ersten und zweiten Radialöffnungen miteinander fluchten, und wobei in zumindest einigen der miteinander fluchtenden Radialöffnungen ein Fixierbolzen zur formschlüssigen Verbindung der Anschlussringe miteinander einliegt.

### Stand der Technik

Bremsscheibenanordnungen der eingangs genannten Art sind aus dem Stand der Technik bekannt. So betrifft die Patentschrift DE 100 32 972 B4 eine Bremsscheibenanordnungen, welche einen Reibring mit einem ersten Anschlussring und einen Bremsscheibentopf mit einem zweiten Anschlussring aufweist. Der erste Anschlussring weist dabei mehrere erste und der zweite Anschlussring mehrere zweite Radialöffnungen auf, wobei die ersten und zweiten Radialöffnungen miteinander fluchtend ausgerichtet sind. Durch Niete, welche in die miteinander fluchtenden Radialöffnungen eingebracht sind, sind der Reibring und der Bremsscheibentopf formschlüssig miteinander verbunden. Aus der Offenlegungsschrift FR 27 97 929 A1 sowie der Offenlegungsschrift US 2013/0146405 A1 gehen ähnliche, durch Fixierbolzen gesicherte Bremsscheibenanordnungen hervor. Die Offenlegungsschrift WO 03/029684 A1 offenbart eine Bremsscheibenanordnung, bei welcher Reibring und Bremsscheibentopf über ein weiteres Ringelement mittels ineinander greifender Erhebungen und Vertiefungen der Ringe nach einem Prinzip der Verzahnung miteinander verbunden sind. Bei diesem Verbindungsprinzip ist der Reibring in Bezug auf die Drehachse des Bremsscheibentopfs axial verlagerbar, was der Funktionsweise dieser Bremsscheibenanordnung geschuldet ist.

### Offenbarung der Erfindung

Erfindungsgemäß ist vorgesehen, dass der erste Anschlussring zumindest ein Wandelement mit zumindest einer weiteren Radialöffnung aufweist, das umfangsseitig dem Anschlussring derart zugeordnet ist, dass die weitere Radialöffnung mit einer der ersten Radialöffnungen fluchtet, und dass der Fixierbolzen auch in der weiteren Radialöffnung einliegt. Der Vorteil hierbei ist, dass durch das Wandelement eine weitere oder zusätzliche Kontaktstelle zur Kraftübertragung zwischen Fixierbolzen und Bremsscheibentopf realisiert ist, so dass eine Vergrößerung des übertragbaren Drehmoments zwischen Reibring und Bremsscheibentopf erreicht wird. Die Gesamtkontaktfläche, die zur Kraftübertragung zur Verfügung steht, ist dabei die Berührungsfläche zwischen der Mantelwand des Fixierbolzens mit jeweils der Innenseite der ersten Radialöffnung des ersten Anschlussrings und der Innenseite der weiteren Radialöffnung des Wandelements. Durch die vergrößerte Gesamtkontaktfläche verringert sich die durch den Fixierbolzen auf den Bremsscheibentopf wirkende mechanische Kraft beziehungsweise Spannung, weil die wirkende Kraft somit auf eine größere Fläche oder Berührungsfläche verteilt wird. Dies minimiert die Gefahr einer Beschädigung des Bremsscheibentopfs aufgrund hoher mechanischer Spannungen und gewährleistet somit eine hohe Stabilität der Verbindung zwischen Reibring und Bremsscheibentopf. Vorzugsweise ist der Bremsscheibentopf aus Blech, beispielsweise Stahlblech, gefertigt.

Vorzugsweise sind die erste, zweite und/oder weitere Radialöffnung als Radialbohrung ausgebildet. Dies hat zum einen den Vorteil, dass die jeweilige Radialöffnung einfach herstellbar ist, beispielsweise durch einen Bohrprozess. Zum anderen ergibt sich der Vorteil, dass bei einem Einliegen des Fixierbolzens in der als Radialbohrung ausgebildeten ersten, zweiten und/oder weiteren Radialöffnung, der Reibring, der Bremsscheibentopf und/oder das Wandelement gegen eine axiale Verschiebung, insbesondere gegen eine Verschiebung in beide axiale Richtungen, besonders effektiv gesichert sind.

Besonders bevorzugt ist vorgesehen, dass die erste, zweite und/oder weitere Radialöffnung als axial randoffene Randöffnung ausgebildet sind. Auch hierbei ergibt sich zum einen der Vorteil, dass die jeweilige Radialöffnung auf einfache Art und Weise herstellbar ist, beispielsweise durch einen Stanzprozess. Zudem ergibt sich der Vorteil einer einfachen Montage oder Montierbarkeit der Bremsscheibenanordnung durch ein axiales Aufschieben insbesondere des Bremsscheibentopfs und/oder des Wandelements auf den Reibring, insbesondere den oder die in dem Reibring eingelegten Fixierbolzen. Vorzugsweise ist vorgesehen, dass zumindest eine der ersten, zweiten und/oder weiteren Radialöffnungen als Radialbohrung, beispielsweise nur die zweite Radialöffnung, und zumindest eine der ersten, zweiten und/oder weiteren Radialöffnungen als Randöffnung, beispielsweise nur die erste und die weitere Radialöffnung, ausgebildet sind.
Gemäß einer bevorzugten Weiterbildung der Erfindung ist vorgesehen, dass das zumindest eine Wandelement dem ersten Anschlussring innenumfangsseitig oder außenumfangsseitig zugeordnet ist. Dies gewährleistet auf vorteilhafte Weise, dass das Wandelement umfangsseitig beliebig an dem Anschlussring anordenbar oder dem Anschlussring zuordenbar ist. Entspricht beispielsweise ein Außendurchmesser des ersten Anschlussrings einem Innendurchmesser des zweiten Anschlussrings, so ist bevorzugt vorgesehen, das Wandelement dem ersten Anschlussring innenumfangsseitig zuzuordnen. Ist der Außendurchmesser des ersten Anschlussrings beispielsweise kleiner als der Innendurchmesser des zweiten Anschlussrings, ist es vorzugsweise vorgesehen, das Wandelement dem ersten Anschlussring außenumfangsseitig zuzuordnen. Damit ist es beispielsweise möglich, mittels des Wandelements den Außendurchmesser des ersten Anschlussrings an den Innendurchmesser des zweiten Anschlussrings anzupassen, so dass der erste Anschlussring und der zweite Anschlussring insbesondere radial spielfrei miteinander verbindbar, insbesondere verpressbar, sind.

Vorzugsweise ist das Wandelement ein koaxial zu dem ersten Anschlussring angeordnetes separates Ringelement. Der Vorteil hierbei ist, dass das Wandelement ein separates Bauteil ist, welches auf einfache Art und Weise, insbesondere mittels des Fixierbolzens, mit dem ersten Anschlussring verbunden ist. Vorzugsweise weist der Anschlussring einen Durchmesser auf, der dem Innendurchmesser oder dem Außendurchmesser des ersten Anschlussrings zumindest im Wesentlichen entspricht. Das Ringelement ist vorzugsweise aus einem metallischen Material gebildet.

Bevorzugt ist vorgesehen, dass das Ringelement in oder auf den ersten Anschlussring ein- oder aufgepresst ist. Der Vorteil hierbei ist, dass das Ringelement auf einfache Art und Weise stabil, insbesondere verliersicher, mit dem ersten Anschlussring verbunden ist. Zudem gewährleistet das Ein- oder Aufpressen des Ringelements in oder auf den ersten Anschlussring eine stabile fluchtende Ausrichtung der ersten und der weiteren Radialöffnung. Zusätzliche Befestigungsmittel oder eine Fixierung des Ringelements an dem ersten Anschlussring mittels des Fixierbolzens sind somit für eine Stabilisierung der fluchtenden Ausrichtung nicht notwendig.

Vorzugsweise ist vorgesehen, dass der erste Anschlussring und das zumindest eine Wandelement durch zumindest einen die erste und die weitere Radialöffnung durchgreifenden Hohlniet miteinander verbunden sind. Der Vorteil hierbei ist, dass der Hohlniet ein Lösen des Wandelements von dem ersten Anschlussring besonders effektiv verhindert. Zudem verhindert der Hohlniet ein Verdrehen des Wandelements relativ zu dem ersten Anschlussring. Der Hohlniet weist bevorzugt einen Innendurchmesser auf, welcher zumindest im Wesentlichen einem Außendurchmesser des Fixierbolzens entspricht, sodass der Fixierbolzen durch den Hohlniet hindurch insbesondere spielfrei führbar ist, um in die Radialöffnung des Reibrings eingeschoben zu werden. Der Hohlniet liegt somit in der ersten oder weiteren Radialöffnung beziehungsweise in dem in der ersten oder weiteren Radialöffnung einliegenden Hohlniet ein, sodass die Kraftübertragung nicht direkt von dem Fixierbolzen auf den Bremsscheibentopf, sondern unter Zwischenschaltung des Hohlniets erfolgt. Weiterhin weist der Hohlniet vorzugsweise einen Außendurchmesser auf, welcher einem Innendurchmesser der ersten und der weiteren Radialöffnung entspricht. Der Hohlniet ist vorzugsweise aus einem metallischen Material gefertigt. Alternativ ist vorgesehen, dass der erste Anschlussring und das zumindest eine Wandelement durch zumindest einen die erste und die weitere Radialöffnung durchgreifenden Vollniet miteinander verbunden sind, wobei der Vollniet bevorzugt anschließend durch einen Bohrvorgang durchbohrt wird, so dass sich dabei der Hohlniet ausbildet. Unabhängig davon, ob der Hohlniet durch Bohren erzeugt wird oder bereits als Hohlniet vorliegt, ist bevorzugt vorgesehen, dass durch den Hohlniet/Vollniet hindurch die zugeordnete zweite Radialöffnung des Reibrings hergestellt oder nachbearbeitet wird, sodass eine fluchtende Ausrichtung der ersten und der weiteren Radialöffnung zu der zweiten Radialöffnung des Reibrings sicher gewährleistet ist. Entsprechend ist bevorzugt ebenso vorgesehen, dass bei einer Ausführungsform ohne Hohlniet oder Vollniet die jeweilige zweite Radialöffnung des Reibrings durch einen Bohrvorgang durch die erste und die weitere Radialöffnung oder durch einen Bohrvorgang, bei welchem auch die erste und die weitere Radialöffnung hergestellt werden, erzeugt wird. Durch eine entsprechende Wahl des Bohrungsdurchmessers wird erreicht, dass ein sicheres Einpressen des Fixierbolzens in den Reibring ermöglicht ist. Gemäß einer bevorzugten Ausführungsform ist der Durchmesser der zweiten Radialöffnung kleiner gewählt als der Durchmesser der ersten und der weiteren Radialöffnung und optional auch kleiner als der Innendurchmesser der optionalen Hohlniet, sodass der Fixierbolzen zwar in den Reibring eingepresst ist, jedoch nicht in Hohlniet oder erste und weitere Radialöffnung, um eine Überbestimmung zu vermeiden und einen sicheren Betrieb zu gewährleisten.

Vorzugsweise ist das Wandelement einstückig mit dem ersten Anschlussring ausgebildet. Der Vorteil hierbei ist, dass das Wandelement durch den Bremsscheibentopf selbst realisiert ist. Separat herzustellende und an den ersten Anschlussring anzuordnende Wandelemente sind somit nicht notwendig. Die einstückige Ausbildung des Wandelements mit dem ersten Anschlussring ermöglicht somit eine besonders kostengünstige und materialsparende Herstellung des Bremsscheibentopfs.

Bevorzugt ist vorgesehen, dass das Wandelement als umgebogene Wandzunge ausgebildet ist. Der Vorteil hierbei ist, dass das Wandelement auf einfache Art und Weise an dem Bremsscheibentopf ausgebildet ist. So ist die Wandzunge durch ein insbesondere einmaliges Umbiegen von Material des Bremsscheibentopfs, insbesondere von Material im Bereich des ersten Anschlussrings, gebildet. Vorzugsweise weist die Wandzunge einen vorgebbaren Abstand zu einer Mantelwand oder dem ersten Anschlussring des Bremsscheibentopfs auf. Alternativ oder zusätzlich ist die Wandzunge durch ein mehrfaches Umbiegen des Materials ausgebildet. Die umgebogene Wandzunge ist dem ersten Anschlussring innen- oder außenumfangsseitig zuordenbar.

Besonders bevorzugt ist vorgesehen, dass der erste Anschlussring mehrere gleichmäßig über den Umfang insbesondere gleichmäßig verteilt angeordnete Wandelemente oder Wandzungen aufweist. Der Vorteil hierbei ist, dass der Bremsscheibentopf an mehreren Stellen entlang dessen Umfang mit dem Reibring formschlüssig verbindbar ist. Dies gewährleistet insbesondere eine höhere Stabilität gegen eine axiale und/oder radiale Verschiebung des Bremsscheibentopfs relativ zu dem Reibring.

Gemäß einer bevorzugten Weiterbildung der Erfindung ist vorgesehen, dass der jeweilige Fixierbolzen in zumindest einer Radialöffnung der miteinander fluchtenden ersten, zweiten und weiteren Radialöffnungen eingepresst ist. Der Vorteil hierbei ist, dass der Fixierbolzen mit zumindest einer der Radialöffnungen besonders stabil, insbesondere spielfrei, verbunden ist. Bevorzugt ist der Fixierbolzen in zumindest die zweite Radialöffnung, also die Radialöffnung des Reibrings, eingepresst. Dabei ist bevorzugt vorgesehen, dass der Reibring zumindest in einem Bereich der zweiten Radialöffnung und/oder der Fixierbolzen zumindest eine Ausgleichsöffnung aufweisen, welche dazu ausgebildet ist, dass Luft durch diese beim Einpressen in die Umgebung entweichen kann. Die Ausgleichsöffnung verhindert somit auf vorteilhafte Weise eine Entstehung eines Luftpolsters bei einem Einpressen des Fixierbolzens in den Reibring. Alternativ ist der Fixierbolzen in die erste, zweite und weitere Radialöffnung eingepresst.

Dies gewährleistet eine besonders effektive und stabile Verbindung zwischen Reibring und Bremsscheibentopf.

Das Verfahren zum Herstellen einer Bremsscheibenanordnung für eine Scheibenbremse eines Kraftfahrzeugs nach einem oder mehreren der vorgehenden Ansprüche zeichnet sich dadurch aus, dass aus einem ersten Material ein Reibring und aus einem zweiten Material ein Bremsscheibentopf gefertigt werden. Der Bremsscheibentopf wird daraufhin an dem Reibring stirnseitig befestigt. Dazu werden an dem Bremsscheibentopf ein erster Anschlussring mit mehreren ersten Radialöffnungen und an dem Reibring ein zweiter Anschlussring mit mehreren zweiten Radialöffnungen ausgebildet. Die Anschlussringe werden dabei derart koaxial zueinander angeordnet, dass zumindest einige der ersten und zweiten Radialöffnungen miteinander fluchten. In zumindest einigen der miteinander fluchtenden Radialöffnungen wird ein Fixierbolzen zur formschlüssigen Verbindung der Anschlussringe miteinander eingelegt. Weiterhin wird in dem ersten Anschlussring zumindest ein Wandelement mit zumindest einer weiteren Radialöffnung ausgebildet, wobei das Wandelement umfangsseitig dem Anschlussring derart zugeordnet wird, dass die weitere Radialöffnung mit einer der ersten Radialöffnungen fluchtet, wobei der Fixierbolzen auch in der weiteren Radialöffnung eingelegt wird. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Im Folgenden soll die Erfindung anhand der Zeichnungen näher erläutert werden. Dazu zeigen
- Figur 1: eine Bremsscheibenanordnung gemäß einem ersten Ausführungsbeispiel in einer Explosionsdarstellung,
- Figur 2: die Bremsscheibenanordnung von Figur 1 in einer Detaildarstellung,
- Figur 3: die Bremsscheibenanordnung von Figur 1 gemäß einer alternativen Ausführungsform,
- Figur 4: die Bremsscheibenanordnung gemäß einem weiteren Ausführungsbeispiel in einer Explosionsdarstellung und
- Figur 5: die Bremsscheibenanordnung von Figur 4 in einer Querschnittsdarstellung.

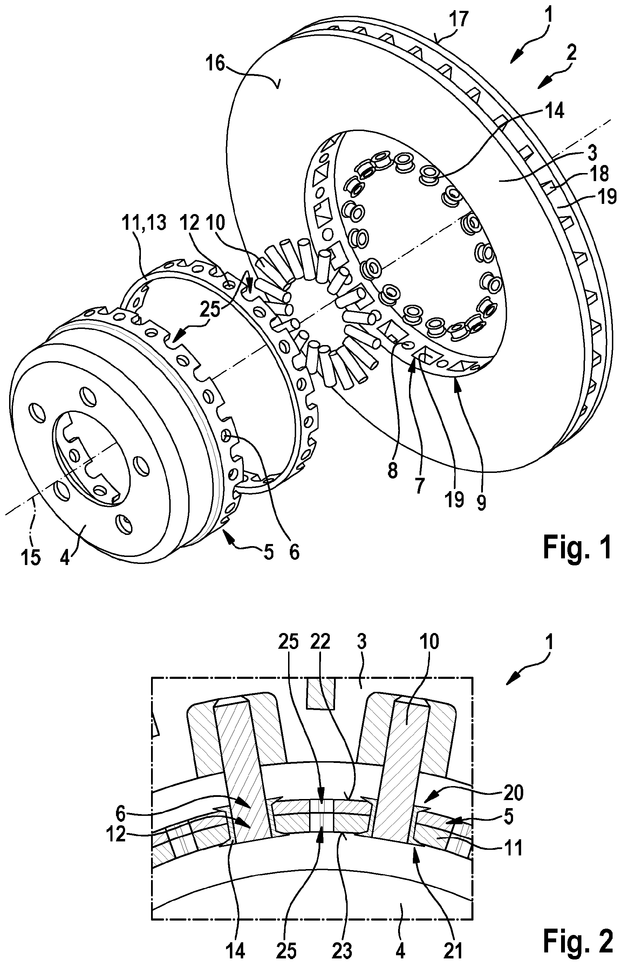

Figur 1 zeigt eine Explosionsdarstellung einer vorteilhaften Bremsscheibenanordnung 1 für eine Scheibenbremse 2 eines hier nicht dargestellten Kraftfahrzeugs, mit einem aus einem ersten Material, insbesondere einem Gusswerkstoff, beispielsweise Eisen, gefertigten Reibring 3 und mit einem aus einem zweiten Material, beispielsweise einem Stahlblech, Aluminium oder einer Aluminium-Legierung, gefertigten Bremsscheibentopf 4. Der Bremsscheibentopf 4 ist stirnseitig an dem Reibring 3 befestigbar/befestigt. Zur stirnseitigen Befestigung weist der Bremsscheibentopf 4 einen ersten Anschlussring 5 mit mehreren ersten, jeweils als Radialbohrung ausgebildeten Radialöffnungen 6 und der Reibring 3 einen zweiten Anschlussring 7 mit mehreren zweiten, jeweils als Radialbohrung ausgebildeten Radialöffnungen 8 auf. Der zweite Anschlussring 7 ist vorliegend durch eine Innenumfangsfläche 9 des Reibrings 3 gebildet. Alternativ ist der zweite Anschlussring 7 durch einen axial vorstehenden Montagering, welcher vorzugsweise an der Innenumfangsfläche 9 angeformt ist, gebildet. Die Anschlussringe 5, 7 sind derart koaxial zueinander angeordnet, dass die ersten Radialöffnungen 6 und die zweiten Radialöffnungen 8 miteinander fluchten. Weiterhin sind Fixierbolzen 10 vorgesehen, welche in den miteinander fluchtenden Radialöffnungen 6, 8 zur formschlüssigen Verbindung des ersten Anschlussrings 5 und des zweiten Anschlussring 7 miteinander einliegen oder einlegbar sind. Die Fixierbolzen 10 sind aus einem Material mit hoher mechanischer Festigkeit gebildet.

Der erste Anschlussring 5 weist zumindest ein Wandelement 11 mit mehreren weiteren, jeweils als Radialbohrung ausgebildeten Radialöffnungen 12 auf. Vorliegend ist das Wandelement 11 ein koaxial zu dem ersten Anschlussring 5 angeordnetes, insbesondere vorgefertigtes, Ringelement 13. Das Wandelement 11 ist umfangsseitig dem ersten Anschlussring 5 derart zugeordnet, dass eine der weiteren Radialöffnungen 12 mit jeweils einer der ersten Radialöffnungen 6 und einer der zweiten Radialöffnungen 8 fluchtet. Dabei ist vorgesehen, dass der Fixierbolzen 10 auch in der weiteren Radialöffnung 12 einliegt. Weiterhin ist zumindest ein die erste Radialöffnung 6 und die weitere Radialöffnung 12 durchgreifender Hohlniet 14 vorgesehen, welcher den ersten Anschlussring 5 und das zumindest eine Wandelement 11 oder das Ringelement 13 miteinander verbindet.

Der Reibring 3 weist weiterhin in Richtung einer Drehachse 15 beabstandet zueinander angeordnete Reibringscheiben 16, 17 auf, die durch zwischen den Reibringscheiben 16, 17 angeordnete, sich in radialer Richtung, also senkrecht zur Drehachse 15, erstreckende Stege 18 insbesondere einstückig miteinander verbunden sind. Dabei ist zwischen jeweils zwei benachbarten Stegen 18 ein Belüftungskanal 19 ausgebildet.

Vorzugsweise weisen die weitere Radialöffnung 12 und die erste und zweite Radialöffnung 6,8 jeweils einen gleichen Durchmesser auf, sodass der Fixierbolzen 10 optimal in alle drei Radialöffnungen 6, 8, 12 einlegbar ist.

Vorzugsweise sind in dem ersten Anschlussring 5 zwischen jeweils zwei ersten Radialöffnungen 6 und/oder in dem Wandelement 11 beziehungsweise dem Ringelement 13 zwischen jeweils zwei weiteren Radialöffnungen 12 jeweils eine in axialer Richtung randoffene Aussparung 25 ausgebildet, welche in einem formschlüssig miteinander verbundenen Zustand von Reibring 3 und Bremsscheibentopf 4 ein Durchströmen von Luft durch die Belüftungskanäle 19 ermöglicht.

Figur 2 zeigt den Reibring 3 und den Bremsscheibentopf 4 in einem durch die Fixierbolzen 10 formschlüssig verbundenen Zustand. Vorliegend ist das Wandelement 11 dem ersten Anschlussring 5 innenumfangsseitig zugeordnet. Alternativ oder zusätzlich ist es vorgesehen, dass weitere Wandelemente 11 innenumfangsseitig und/oder außenumfangsseitig dem ersten Anschlussring 5 zugeordnet oder zuordenbar sind. Um eine stabile Verbindung von Wandelement 11 und dem ersten Anschlussring 5 zu gewährleisten, ist das Wandelement 11 oder das Ringelement 13 in den ersten Anschlussring 5 vorzugsweise eingepresst. Der den ersten Anschlussring 5 und das Wandelement 11 verbindende Hohlniet 14 weist vorzugsweise an dessen beiden Enden oder Endabschnitten, also einem radial innenliegenden und einem radial außenliegenden Endabschnitt, jeweils einen Kragen 20, 21 auf. Vorliegend liegt der eine Kragen 20 auf einer Außenumfangsmantelwand 22 des ersten Anschlussrings 5 und der andere Kragen 21 auf einer Innenumfangsmantelwand 23 des Ringelements 13 auf. Dies gewährleistet eine besonders stabile Verbindung zwischen dem ersten Anschlussring 5 und dem Ringelement 11.

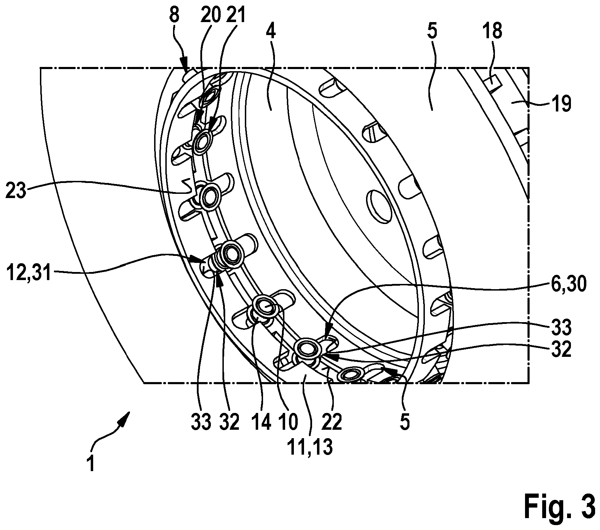

Figur 3 zeigt eine alternative Ausführungsform der Bremsscheibenanordnung 1 aus Figur 1. Vorliegend sind im Unterschied zu der aus Figur 1 bekannten Bremsscheibenanordnung 1 in dem ersten Anschlussring 5 die ersten Radialöffnungen 6 als in axialer Richtung randoffene erste Randöffnungen 30 und in dem Wandelement 11 beziehungsweise dem Ringelement 13 die weiteren Radialöffnungen 12 als in axialer Richtung randoffene Randöffnungen 31 ausgebildet. Sowohl eine erste Randöffnung 30 als auch eine weitere Randöffnung 31 weisen dabei jeweils eine Axialaufnahme 32 auf, durch welchen der Hohlniet 14 oder alternativ nur der Fixierbolzen 10 einführbar ist, und einen Axialanschlag 33, welcher eine maximale, insbesondere vorgebbare Einführtiefe des Hohlniets 14 in die jeweilige Randöffnung 30,31 begrenzt.

Vorliegend liegt jeweils ein Fixierbolzen 10 in jeweils einer als Radialbohrung ausgebildeten ersten Radialöffnung 8 des Reibrings 3 ein. Dabei ist jeweils ein Fixierbolzen 10 durch jeweils einen Hohlniet 14 spielfrei geführt. Zur Montage oder formschlüssigen Verbindung von Reibring 3, Bremsscheibentopf 4 und Ringelement 13 werden sowohl der Bremsscheibentopf 4 als auch das Ringelement 13 axial auf die Hohlniete 14 aufgeschoben. Vorzugsweise wird dabei der Bremsscheibentopf 4 von einer ersten Seite und das Ringelement 13 von einer der ersten Seite gegenüberliegenden anderen Seite axial auf den Reibring 3 beziehungsweise die Hohlniete 14 geschoben. Dies gewährleistet, dass der Hohlniet 14 durch den Bremsscheibentopf 4 und das Ringelement 13 umschlossen wird. Vorzugsweise werden der Bremsscheibentopf 4 und das Ringelement 13 nach einem Aufschieben auf den Hohlniet 14 formschlüssig befestigt, insbesondere durch ein Ausbilden des einen Kragens 20, der auf der Außenumfangsmantelwand 22 des ersten Anschlussrings 5, und durch Ausbilden des anderen Kragens 21, der auf der Innenumfangsmantelwand 23 des Ringelements 13 aufliegt. Alternativ sind die Kragen 20,21 des Hohlniets 14 bereits vor einer Montage des Bremsscheibentopfs 4 und des Wandelements 13 an dem Reibring 3 oder den Hohlnieten 14 ausgebildet. Vorzugsweise wird das Ringelement 13 bei der Montage in den Bremsscheibentopf 4 eingepresst.

Durch die Ausbildung der Randöffnungen 30,31 ergibt sich der Vorteil einer einfachen und leicht durchführbaren Montierbarkeit der Bremsscheibenanordnung 1. Zudem sind die ersten und weiteren Radialöffnungen 6,12 oder Randöffnungen 30,31 auf einfache Art und Weise, insbesondere durch einen Stanzprozess, herstellbar oder ausbildbar. Alternativ ist auch die zweite Radialöffnung 8 als Randöffnung ausbildbar.

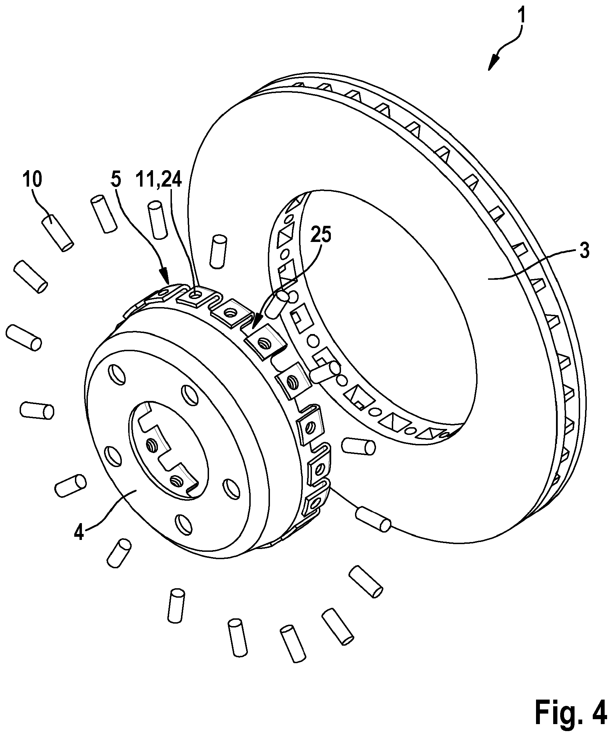

Figur 4 zeigt die Bremsscheibenanordnung 1, wobei im Unterschied zu dem Ausführungsbeispiel aus Figur 1 nunmehr das Wandelement 11 einstückig mit dem ersten Anschlussring 5 ausgebildet ist. Vorliegend weist der erste Anschlussring 5 mehrere gleichmäßig über dessen Umfang verteilt angeordnete Wandelemente 11 auf, wobei die Wandelemente 11 vorliegend als umgebogene Wandzungen 24 ausgebildet sind. Insbesondere ist vorgesehen, zur Ausbildung der Wandzungen 24 zumindest einen Umfangsabschnitt des ersten Anschlussrings 5 umzubiegen. Vorliegend sind die Wandzungen 24 außenumfangsseitig dem ersten Anschlussring 5 zugeordnet. Alternativ ist vorgesehen, die Wandzungen 24 innenumfangsseitig dem ersten Anschlussring 5 zuzuordnen. Vorliegend weist der erste Anschlussring 5 mehrere gleichmäßig über den Umfang verteilt angeordnete Wandzungen 24 auf. Zwischen zwei benachbarten Wandzungen 24 ist vorliegend jeweils eine Aussparung 25 ausgebildet, welche in einem formschlüssig miteinander verbundenen Zustand von Reibring 3 und Bremsscheibentop 4 ein Durchströmen von Luft durch die Belüftungskanäle 19 ermöglicht.

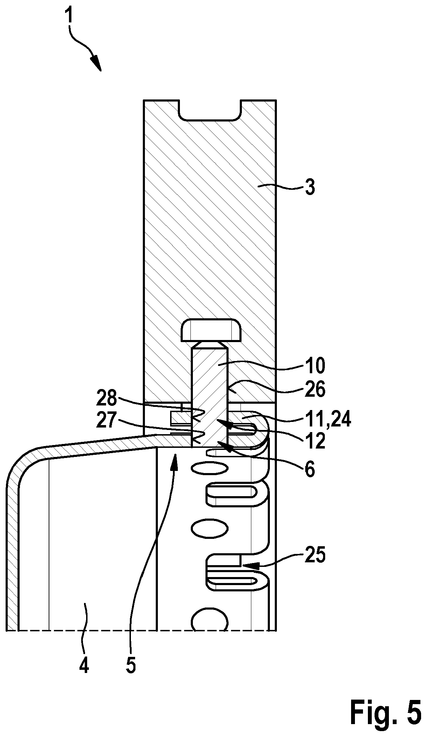

Figur 5 zeigt die Bremsscheibenanordnung 1 von Figur 4, wobei der Reibring 3 und der Bremsscheibentopf 4 durch die Fixierbolzen 10 formschlüssig miteinander verbunden sind. Der Fixierbolzen 10 ist vorzugsweise in die miteinander fluchtenden erste Radialöffnung 6, zweite Radialöffnung 8 und die weitere Radialöffnung 12 eingepresst. Das Einpressen des Fixierbolzens 10 gewährleistet eine besonders stabile formschlüssige Verbindung zwischen Reibring 3 und Bremsscheibentopf 4. Vorliegend ragt der Fixierbolzen 10 in die zweite Radialöffnung 6 hinein. Vorzugsweise ist vorgesehen, dass der Fixierbolzen 10 durch die erste Radialöffnung 6 hindurchragt.

Vorzugsweise ist vorgesehen, dass der Fixierbolzen 10 zunächst durch den Bremsscheibentopf 4, insbesondere die erste Radialöffnung 6 und die weitere Radialöffnung 12, geführt wird und anschließend in die zweite Radialöffnung 8 oder Radialbohrung des Reibrings 3 eingepresst wird. Vorteilhafterweise weist der Reibring an jeder der zweiten Radialöffnungen 8 jeweils eine Ausgleichsöffnung auf, durch welche Luft beim Einpressen des Fixierbolzens 10 entweichen kann. Alternativ oder zusätzlich ist an dem jeweiligen Fixierbolzen 10 zumindest eine Ausgleichsverjüngung, Abflachung, Nut oder Durchbohrung vorgesehen, die eine Ausgleichsöffnung beim Einpressen des Fixierbolzens 10 in die jeweilige zweite Radialöffnung bildet. Vorzugsweise erfolgt nach Verbinden von Reibring 3 und Bremsscheibentopf 4 durch den Fixierbolzen 10 ein weiterer Bearbeitungsschritt, bei welchem eine Scheibendicke des Reibrings 3 und/oder des Bremsscheibentopfs 4 anpassbar ist. Zusätzlich oder alternativ ist eine Planlaufabweichung (lateral run-out) anpassbar.

Der Vorteil der Bremsscheibenanordnung 1 ist, dass das Wandelement 11 und/oder der Hohlniet 14 eine weitere oder zusätzliche Kontaktstelle zur Kraftübertragung zwischen Fixierbolzen 10 und Bremsscheibentopf 4 realisiert, so dass eine Vergrößerung des übertragbaren Drehmoments zwischen Reibring 3 und Bremsscheibentopf 4 erreicht wird. Die Gesamtkontaktfläche, die zur Kraftübertragung zur Verfügung steht, ist dabei die Berührungsfläche zwischen einer Mantelwand 26 oder Außenmantelwand des Fixierbolzens 10 mit jeweils einer Innenseite 27 oder Innenmantelwand der ersten Radialöffnung 6 des ersten Anschlussrings 5 und einer weiteren Innenseite 28 oder Innenmantelwand der weiteren Radialöffnung 12 des als Ringelement 13 oder Wandzunge 24 ausgebildeten Wandelements 11. Durch die vergrößerte Gesamtkontaktfläche verringert sich die durch den Fixierbolzen 10 auf den Bremsscheibentopf 4 wirkende mechanische Kraft oder Spannung.

Zur Herstellung des Bremsscheibentopfs 4 und/oder der Ausbildung der Wandzungen 24 ist vorgesehen, zunächst den Bremsscheibentopf 4 in Form eines vorzugsweise kreisrunden Stahlbleches bereitzustellen. Das Stahlblech weist vorzugsweise eine Dicke von 2,5 mm bis 2,8 mm auf. Die Dicke des Stahlblechs bestimmt dabei die Dicke des im Folgenden auszubildenden ersten Wandelements 11 sowie die Dicke des ersten Anschlussrings 5. Daraufhin erfolgt bevorzugt ein Stanzprozess, bei welchem radiale Streifen oder die Wandzungen 24 aus dem Stahlblech gestanzt werden. Daraufhin erfolgt ein Umformprozess, bei welchem das Stahlblech in eine Bremsscheibentopfform umgeformt wird. Anschließend erfolgt ein weiterer Umformprozess oder ein Falzschritt, bei welchem die radialen Streifen oder Wandzungen 24 umgebogen werden, so dass sich dabei die als umgebogene Wandzungen 24 ausgebildeten Wandelemente 11 bilden. Dann erfolgt ein Bohrungsschritt, bei welchem die erste Radialöffnung 6, insbesondere erste Radialbohrung, in dem ersten Anschlussring 5 und die weitere Radialöffnung 12, insbesondere weitere Radialbohrung, in dem Wandelement 11 miteinander fluchtend ausgebildet werden. Optional ist vorgesehen, dass nach einem Bohren der Radialöffnungen 6, 12 ein weiterer Prozessschritt durchgeführt wird, welcher die Radialöffnungen 8, 12, insbesondere deren Durchmesser, derart aufweitet, dass diese jeweils einem Außendurchmesser des Fixierbolzens 10 entsprechen.

Im Fall, dass das Wandelement 11 als Ringelement 13 ausgebildet ist und in den ersten Anschlussring 5 eingepresst wird, ist vorzugsweise vorgesehen, dass nach dem Einpressen die erste Radialöffnung 6 und die weitere Radialöffnung 12 mittels einer Bohrung ausgebildet werden. Alternativ werden die ersten Radialöffnungen 6 und weiteren Radialöffnungen 12 vor einem Einpressen des Ringelements 13 in den ersten Anschlussring 5 mittels eines Stanzprozesses als erste Randöffnungen 30 und weitere Randöffnungen 31 ausgebildet.

Gemäß einer alternativen Ausführungsform ist vorgesehen, dass das einstückig mit dem Anschlussring 5 ausgebildete Wandelement 11 als Flansch 29 ausgebildet ist. Dabei ist eine Stirnseite des Flansches 29 vorzugsweise durch die Außenumfangsmantelwand 22 des Bremsscheibentopfs 4 und ein rohrförmiger Abschnitt des Flansches 29 durch eine in radiale Richtung verlängerte Innenmantelwand 27 der ersten Radialöffnung 6 gebildet. Ist das Wandelement 11 als Flansch 29 ausgebildet, entspricht vorzugsweise die weitere Radialöffnung 12 der ersten Radialöffnung 6.

## Patentansprüche

1. Bremsscheibenanordnung (1) für eine Scheibenbremse (2) eines Kraftfahrzeugs, mit einem aus einem ersten Material gefertigten Reibring (3) und mit einem aus einem zweiten Material gefertigten Bremsscheibentopf (4), der an dem Reibring (3) stirnseitig befestigt ist, wozu der Bremsscheibentopf (4) einen ersten Anschlussring (5) mit mehreren ersten Radialöffnungen (6) und der Reibring (4) einen zweiten Anschlussring (7) mit mehreren zweiten Radialöffnungen (8) aufweist, wobei die Anschlussringe (5,7) derart koaxial zueinander angeordnet sind, dass zumindest einige der ersten und zweiten Radialöffnungen (6,8) miteinander fluchten, und wobei in zumindest einigen der miteinander fluchtenden Radialöffnungen (6,8) ein Fixierbolzen (10) zur formschlüssigen Verbindung der Anschlussringe (5,7) miteinander einliegt, **dadurch gekennzeichnet, dass** der erste Anschlussring (5) zumindest ein Wandelement (11) mit zumindest einer weiteren Radialöffnung (12) aufweist, das umfangsseitig dem ersten Anschlussring (5) derart zugeordnet ist, dass die weitere Radialöffnung (12) mit einer der ersten Radialöffnungen (6) fluchtet, und dass der Fixierbolzen (10) auch in der weiteren Radialöffnung (12) einliegt.

2. Bremsscheibenanordnung nach Anspruch 1, **dadurch gekennzeichnet, dass** die erste, zweite und/oder weitere Radialöffnung (6,8,12) als Radialbohrung ausgebildet sind.

3. Bremsscheibenanordnung nach einem der vorhergehenden Ansprüche, **dadurch gekennzeichnet, dass** die erste, zweite und/oder weitere Radialöffnung (6,8,12) als axial randoffene Randöffnung (30,31) ausgebildet sind.

4. Bremsscheibenanordnung nach Anspruch 1, **dadurch gekennzeichnet, dass** das zumindest eine Wandelement (11) dem ersten Anschlussring (5) innenumfangsseitig oder außenumfangsseitig zugeordnet ist.

5. Bremsscheibenanordnung nach einem der vorhergehenden Ansprüche, **dadurch gekennzeichnet, dass** das Wandelement (11) ein koaxial zu dem ersten Anschlussring (5) angeordnetes separates Ringelement (13) ist.

6. Bremsscheibenanordnung nach Anspruch 5, **dadurch gekennzeichnet, dass** das Ringelement (13) in oder auf den ersten Anschlussring (5) einbeziehungsweise aufgepresst ist.

7. Bremsscheibenanordnung nach einem der vorhergehenden Ansprüche, **dadurch gekennzeichnet, dass** der erste Anschlussring (5) und das zumindest eine Wandelement (11) durch zumindest eine die erste Radialöffnung (6) und die weitere Radialöffnung (12) durchgreifende Hohlniet (14) miteinander verbunden sind.

8. Bremsscheibenanordnung nach einem der Ansprüche 1 bis 4 oder 7, **dadurch gekennzeichnet, dass** das Wandelement (11) einstückig mit dem ersten Anschlussring (5) ausgebildet ist.

9. Bremsscheibenanordnung nach Anspruch 8, **dadurch gekennzeichnet, dass** das Wandelement (11) als umgebogene Wandzunge (24) ausgebildet ist.

10. Bremsscheibenanordnung Anspruch 9, **dadurch gekennzeichnet, dass** der erste Anschlussring (5) mehrere gleichmäßig über den Umfang verteilt angeordnete Wandzungen (24) aufweist.

11. Bremsscheibenanordnung nach einem der vorhergehenden Ansprüche, **dadurch gekennzeichnet, dass** der jeweilige Fixierbolzen (10) in zumindest eine Radialöffnung (6, 8, 12) der miteinander fluchtenden ersten, zweiten und weiteren Radialöffnungen (6, 8 ,12) eingepresst ist.

12. Verfahren zum Herstellen einer Bremsscheibenanordnung (1) für eine Scheibenbremse (2) eines Kraftfahrzeugs nach einem oder mehreren der Ansprüche 1 bis 11, wobei aus einem ersten Material ein Reibring (3) und aus einem zweiten Material ein Bremsscheibentopf (4) gefertigt werden, wobei der Bremsscheibentopf (4) an dem Reibring (3) stirnseitig befestigt wird, wozu an dem Bremsscheibentopf (4) ein erster Anschlussring (5) mit mehreren ersten Radialöffnungen (6) und an dem Reibring (3) ein zweiter Anschlussring (7) mit mehreren zweiten Radialöffnungen (8) ausgebildet werden, wobei die Anschlussringe (5,7) derart koaxial zueinander angeordnet werden, dass zumindest einige der ersten und zweiten Radialöffnungen (6,8) miteinander fluchten, und wobei in zumindest einigen der miteinander fluchtenden Radialöffnungen (6,8) ein Fixierbolzen (10) zur formschlüssigen Verbindung der Anschlussringe (5,7) miteinander eingelegt wird, **dadurch gekennzeichnet, dass** in dem ersten Anschlussring (5) zumindest ein Wandelement (11) mit zumindest einer weiteren Radialöffnung (12) ausgebildet wird, das umfangsseitig dem ersten Anschlussring (5) derart zugeordnet wird, dass die weitere Radialöffnung (12) mit einer der ersten Radialöffnungen (6) fluchtet, und dass der Fixierbolzen (10) auch in der weiteren Radialöffnung (12) eingelegt wird.

## Claims

1. Brake disk assembly (1) for a disk brake (2) of a motor vehicle, having a friction ring (3) which is made from a first material, and having a brake disk chamber (4) which is made from a second material and is fastened to the friction ring (3) at the end side, to which end the brake disk chamber (4) has a first connector ring (5) having a plurality of first radial openings (6), and the friction ring (4) has a second connector ring (7) having a plurality of second radial openings (8), wherein the connector rings (5, 7) are disposed so as to be mutually coaxial in such a manner that at least some of the first and the second radial openings (6, 8) are mutually aligned, and wherein a fixing pin (10) for the form-fitting mutual connection of the connector rings (5, 7) lies in at least some of the mutually aligned radial openings (6, 8),
**characterized in that** the first connector ring (5) has at least one wall element (11) which has at least one further radial opening (12) and is assigned to the first connector ring (5) on the circumference in such a manner that the further radial opening (12) is aligned with one of the first radial openings (6), and **in that** the fixing pin (10) lies also in the further radial opening (12).

2. Brake disk assembly according to Claim 1, **characterized in that** the first, the second and/or a further radial opening (6, 8, 12) are configured as a radial bore.

3. Brake disk assembly according to one of the preceding claims, **characterized in that** the first, the second and/or a further radial opening (6, 8, 12) are configured as an axial peripheral opening (30, 31) that is open toward the periphery.

4. Brake disk assembly according to Claim 1, **characterized in that** the at least one wall element (11) is assigned to the first connector ring (5) on the internal circumference or the external circumference.

5. Brake disk assembly according to one of the preceding claims, **characterized in that** the wall element (11) is a separate ring element (13) which is disposed so as to be coaxial with the first connector ring (5).

6. Brake disk assembly according to Claim 5, **characterized in that** the ring element (13) is press-fitted into or onto the first connector ring (5), respectively.

7. Brake disk assembly according to one of the preceding claims, **characterized in that** the first connector ring (5) and the at least one wall element (11) are connected to one another by at least one tubular rivet (14) which penetrates the first radial opening (6) and the further radial opening (12).

8. Brake disk assembly according to one of Claims 1 to 4 or 7, **characterized in that** the wall element (11) is configured so as to be integral to the first connector ring (5).

9. Brake disk assembly according to Claim 8, **characterized in that** the wall element (11) is configured as a bent-back wall tongue (24).

10. Brake disk assembly according to Claim 9, **characterized in that** the first connector ring (5) has a plurality of wall tongues (24) which are disposed uniformly across the circumference.

11. Brake disk assembly according to one of the preceding claims, **characterized in that** the respective fixing pin (10) is press-fitted into at least one radial opening (6, 8, 12) of the mutually aligned first, second and further radial openings (6, 8, 12).

12. Method for producing a brake disk assembly (1) for a disk brake (2) of a motor vehicle according to one or a plurality of Claims 1 to 11, wherein a friction ring (3) is made from a first material and a brake disk chamber (4) is made from a second material, wherein the brake disk chamber (4) is fastened to the friction ring (3) at the end side, to which end a first connector ring (5) which has a plurality of first radial openings (6) is configured on the brake disk chamber (4), and a second connector ring (7) which has a plurality of second radial openings (8) is configured on the friction ring (3), wherein the connector rings (5, 7) are disposed so as to be mutually coaxial in such a manner that at least some of the first and the second radial openings (6, 8) are mutually aligned, and wherein a fixing pin (10) for the form-fitting mutual connection of the connector rings (5, 7) is placed into at least some of the mutually aligned radial openings (6, 8), **characterized in that** at least one wall element (11) which has at least one further radial opening (12) and is assigned to the first connector ring (5) on the circumference in such a manner that the further radial opening (12) is aligned with one of the first radial openings (6) is configured in the first connector ring (5), and **in that** the fixing pin (10) is placed also into the further radial opening (12).

## Revendications

1. Ensemble disque de frein (1) pour un frein à disque (2) d'un véhicule automobile, comportant une bague de friction (3) fabriquée à partir d'une première matière et comportant une nacelle de disque de frein (4) fabriquée à partir d'une deuxième matière, laquelle nacelle est fixée à la bague de friction (3) du côté frontal, la nacelle de disque de frein (4) comprenant une première bague de raccordement (5) dotée de plusieurs premières ouvertures radiales (6) et la bague de friction (4) comprenant une deuxième bague de raccordement (7) dotée de plusieurs deuxièmes ouvertures radiales (8) à cet effet, dans lequel les bagues de raccordement (5, 7) sont disposées coaxialement l'une par rapport à l'autre de telle sorte qu'au moins certaines des premières et deuxièmes ouvertures radiales (6, 8) sont alignées les unes avec les autres, et dans lequel un tenon de fixation (10) pour la liaison par complémentarité de forme des bagues de raccordement (5, 7) l'une à l'autre est inséré dans au moins certaines des ouvertures radiales (6, 8) en alignement les unes avec les autres, **caractérisé en ce que** la première bague de raccordement (5) comprend au moins un élément de paroi (11) doté d'au moins une autre ouverture radiale (12), lequel est associé à la première bague de raccordement (5) du côté périphérique de telle sorte que l'autre ouverture radiale (12) soit alignée avec l'une des premières ouvertures radiales (6), et de telle sorte que le tenon de fixation (10) soit inséré également dans l'autre ouverture radiale (12).

2. Ensemble disque de frein selon la revendication 1, **caractérisé en ce que** les premières, deuxièmes et/ou autres ouvertures radiales (6, 8, 12) sont réalisées sous forme d'alésages radiaux.

3. Ensemble disque de frein selon l'une des revendications précédentes, **caractérisé en ce que** les premières, deuxièmes et/ou autres ouvertures radiales (6, 8, 12) sont réalisées sous forme d'ouvertures marginales (30, 31) à bord ouvert axialement.

4. Ensemble disque de frein selon la revendication 1, **caractérisé en ce que** l'au moins un élément de paroi (11) est associé à la première bague de raccordement (5) du côté de la périphérie intérieure ou du côté de la périphérie extérieure.

5. Ensemble disque de frein selon l'une des revendications précédentes, **caractérisé en ce que** l'élément de paroi (11) est un élément annulaire (13) distinct disposé coaxialement par rapport à la première bague de raccordement (5).

6. Ensemble disque de frein selon la revendication 5, **caractérisé en ce que** l'élément annulaire (13) est enfoncé ou engagé par pression dans ou sur la première bague de raccordement (5).

7. Ensemble disque de frein selon l'une des revendications précédentes, **caractérisé en ce que** la première bague de raccordement (5) et l'au moins un élément de paroi (11) sont reliés l'un à l'autre par au moins un rivet tubulaire (14) traversant la première ouverture radiale (6) et l'autre ouverture radiale (12).

8. Ensemble disque de frein selon l'une des revendications 1 à 4 ou 7, **caractérisé en ce que** l'élément de paroi (11) est réalisé d'une seule pièce avec la première bague de raccordement (5).

9. Ensemble disque de frein selon la revendication 8, **caractérisé en ce que** l'élément de paroi (11) est réalisé sous forme de languette de paroi (24) recourbée.

10. Ensemble disque de frein selon la revendication 9, **caractérisé en ce que** la première bague de raccordement (5) comprend plusieurs languettes de paroi (24) disposées de manière répartie uniformément sur la périphérie.

11. Ensemble disque de frein selon l'une des revendications précédentes, **caractérisé en ce que** le tenon de fixation respectif (10) est enfoncé dans au moins une ouverture radiale (6, 8, 12) des premières, deuxièmes et autres ouvertures radiales (6, 8, 12) en alignement les unes avec les autres.

12. Procédé de production d'un ensemble disque de frein (1) pour un frein à disque (2) d'un véhicule automobile selon l'une ou plusieurs des revendications 1 à 11, dans lequel une bague de friction (3) est fabriquée à partir d'une première matière et une nacelle de disque de frein (4) est fabriquée à partir d'une deuxième matière, dans lequel la nacelle de disque de frein (4) est fixée à la bague de friction (3) du côté frontal, une première bague de raccordement (5) dotée de plusieurs premières ouvertures radiales (6) étant formée sur la nacelle de disque de frein (4) et une deuxième bague de raccordement (7) dotée de plusieurs deuxièmes ouvertures radiales (8) étant formée sur la bague de friction (3) à cet effet, dans lequel les bagues de raccordement (5, 7) sont disposées coaxialement l'une par rapport à l'autre de telle sorte qu'au moins certaines des premières et deuxièmes ouvertures radiales (6, 8) sont alignées les unes avec les autres, et dans lequel un tenon de fixation (10) pour la liaison par complémentarité de forme des bagues de raccordement (5, 7) l'une à l'autre est inséré dans au moins certaines des ouvertures radiales (6, 8) en alignement les unes avec les autres, **caractérisé en ce qu'**au moins un élément de paroi (11) doté d'au moins une autre ouverture radiale (12) est formé dans la première bague de raccordement (5), lequel est associé à la première bague de raccordement (5) du côté périphérique de telle sorte que l'autre ouverture radiale (12) soit alignée avec l'une des premières ouvertures radiales (6), et de telle sorte que le tenon de fixation (10) soit inséré également dans l'autre ouverture radiale (12) .
